(19) Europäisches Patentamt
European Patent Office
Office européen des brevets

(11) EP 4 706 907 A1

(12) EUROPEAN PATENT APPLICATION
published in accordance with Art. 153(4) EPC

(43) Date of publication:
11.03.2026 Bulletin 2026/11

(51) International Patent Classification (IPC):
B25J 9/16 (2006.01)      B25J 13/08 (2006.01)
G06N 10/40 (2022.01)

(21) Application number: 25743952.1

(22) Date of filing: 23.07.2025

(86) International application number:
PCT/KR2025/010882

(87) International publication number:
WO 2026/024082 (29.01.2026 Gazette 2026/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.07.2024 KR 20240098162 U

(71) Applicant: Base and Power City Corp.
Seoul 05695 (KR)

(72) Inventors:
• LEE, Dong Uk
  Seoul 05624 (KR)
• PARK, Sung Soo
  Seoul 07974 (KR)

(74) Representative: Danubia Patent & Law Office LLC
Bajcsy-Zsilinszky út 16
1051 Budapest (HU)

(54) **MULTI-AGENT INTEGRATED ROBOT USING QUANTUM COMPUTING AND OPERATING METHOD THEREFOR**

(57)    Disclosed are an integrated multi-agent robot using quantum computing and a method of operating the same. The integrated multi-agent robot using quantum computing includes a quantum main unit including a computational unit (CPU) that performs quantum computing; and a plurality of agent units whose behaviors are controlled by the quantum main unit, wherein each of the plurality of agent units collects environmental elements using at least one sensor, and operates by driving at least one built-in power actuator based on the collected environmental elements.

【FIG. 2】

## Description

[Technical Field]

The present invention relates to the operation of multi-agents, and more particularly, to an integrated multi-agent robot using quantum computing to optimize the behavior of the multi-agents.

[Background Art]

Multi-Agent Reinforcement Learning (MARL) is a subfield of Reinforcement Learning (RL) that deals with the process by which multiple agents learn to find optimal policies in an environment where they interact with each other. The objective in this context may be interpreted as finding the optimal behavior for each agent or the optimal strategy for the entire system.

MARL is important in various fields such as robotics, autonomous vehicles, and game theory, and it involves unique complexities and challenges that do not arise in single-agent reinforcement learning.

Compared to single-agent reinforcement learning, a key characteristic of MARL is that multiple agents interact with each other's behaviors and outcomes during learning, and thus must find optimal actions in a state where their behaviors are organically linked.

MARL may be implemented as a fully decentralized system in which each agent learns using only its own observed information and acts based on it. However, this approach presents challenges in learning collaborative behavior.

To address this, recent studies mainly adopt a method known as Centralized Training and Decentralized Execution (CTDE), in which the behavior model is trained by aggregating observation data from all agents, and during the execution of the behavior model, each agent acts based only on its own observation.

Meanwhile, the rapid advancement of quantum computing is also bringing significant changes to artificial intelligence learning. Quantum computing is known for its revolutionary data processing speed because it processes qubits (quantum bits), which are a superposition of the states 0 and 1, by utilizing the phenomenon of quantum superposition. In neural network training, qubits may serve as neurons, the fundamental units of the network, and a quantum system containing qubits can be designed to mimic conventional neural networks so that it functions as a neural network.

Dong D. Chen C. Li H. Tarn T. J. (2008). Quantum reinforcement learning. IEEE Transactions on Systems, Man, and Cybernetics. Part B, Cybernetics, 38(5), 1207-1220. 10.1109/TSMCB. 2008.92574318784007.

Narayanan A. Menneer T. (2000). Quantum artificial neural network architectures and components. Information Sciences, 128(3-4), 231-255. 10.1016/S0020-0255(00)00055-4.

V. Saggio (2021). Experimental quantum speed-up in reinforcement learning agents. Nature 591, 229-233 (2021). https://arxiv.org/abs/2103.06294

Chao Yu (2021), The Surprising Effectiveness of PPO in Cooperative, Multi-Agent Games, arXiv:2103.01955, https://doi.org/10.48550/arXiv.2103.01955

Georgios Papoudakis (2019), Dealing with Non-Stationarity in Multi-Agent Deep Reinforcement Learning, arXiv:1906.04737

Yihan Wang (2020), Off-Policy Multi-Agent Decomposed Policy Gradients, arXiv:2007.12322, https://doi.org/10.48550/arXiv.2007.12322

[Disclosure]

[Technical Problem]

Therefore, the present invention has been made in view of the above problems, and it is an object of the present invention to provide an integrated multi-agent robot using quantum computing and a method of operating the same.

[Technical Solution]

In accordance with an aspect of the present invention, the above and other objects can be accomplished by the provision of an integrated multi-agent robot using quantum computing.

The integrated multi-agent robot using quantum computing includes a quantum main unit including a computational unit (CPU) that performs quantum computing; and a plurality of agent units whose behaviors are controlled by the quantum main unit.

Each of the plurality of agent units collects environmental elements using at least one sensor, and operates by driving at least one built-in power actuator based on the collected environmental elements.

Each of the plural agent units generates environmental information including the environmental elements and provides the environmental information to the quantum main unit.

The quantum main unit collects all the environmental information gathered from each of the plural agent units, performs quantum computing-based operations on the collected environmental information to evaluate a contribution corresponding to each of the plural agent units, and determines, for each agent unit, an action policy that maximizes a value function in the environment defined by the agent unit's environmental information based on the evaluated contribution, and provides the determined action policy to a corresponding agent unit.

The robot may include a group of agent units spaced apart from each other in four directions, i.e., up, down, left, and right, with respect to a center where the quantum main unit is positioned.

The group may be arranged in a grid pattern with predetermined spacing between units, and may be composed of 25 agent units arranged in 5 rows and 5 columns.

The at least one sensor may be arranged at predetermined intervals along boundary lines in upward, rightward, and downward directions around the group.

Each of the agent units may have a single motion axis configured to allow movement in a direction perpendicular to the plane on which the agent unit is disposed.

[Advantageous effects]

When using the integrated multi-agent robot using quantum computing and the method of operating the same according to the present invention as described above, the use of quantum computing can optimize the operation of each agent even when a very large number of agent units are arranged, thereby allowing the most ideal operations to be achieved.

In particular, a deployment structure can be proposed that enables optimal operation in an environment where agent units are arranged in groups, each having a single motion axis, and are controlled for movement.

[Description of Drawings]

FIG. 1 is a conceptual diagram illustrating the operational environment of an integrated multi-agent robot using quantum computing according to an embodiment.

FIG. 2 is a diagram exemplarily illustrating the configuration of the integrated multi-agent robot using quantum computing according to an embodiment.

FIG. 3 is a diagram illustrating the integrated multi-agent robot using quantum computing according to an embodiment in a two-dimensional plane.

FIG. 4 is a diagram illustrating the integrated multi-agent robot using quantum computing according to an embodiment in a three-dimensional structure.

FIG. 5 is a diagram illustrating an embodiment in which the agent units of the integrated multi-agent robot using quantum computing according to FIG. 4 are extended and applied.

**DETAILED DESCRIPTION OF THE DISCLOSURE**

Since the present invention may be applied with various modifications and may have various embodiments, exemplary embodiments and drawings of the present invention are intended to be explained and exemplified. However, these exemplary embodiments and drawings are not intended to limit the embodiments of the present invention to particular modes of practice, and all changes, equivalents, and substitutes that do not depart from the spirit and technical scope of the present invention should be understood as being encompassed in the present invention. Like reference numerals refer to like elements in describing each drawing.

The terms such as "first," "second," "A" and "B" are used herein merely to describe a variety of constituent elements, but the constituent elements are not limited by the terms. The terms are used only for the purpose of distinguishing one constituent element from another constituent element. For example, a first element may be termed a second element and a second element may be termed a first element without departing from the teachings of the present invention. The term "and/or" includes any or all combinations of one or more of the associated listed items.

It should be understood that when an element is referred to as being "connected to" or "coupled to" another element, the element may be directly connected or coupled to the other element or intervening elements may be present. In contrast, when an element is referred to as being "directly connected to" or "directly coupled to" another element, there are no intervening elements present.

The terms used in the present specification are used to explain a specific exemplary embodiment and not to limit the present inventive concept. Thus, the expression of singularity in the present specification includes the expression of plurality unless clearly specified otherwise in context. Also, terms such as "include" or "comprise" should be construed as denoting that a certain characteristic, number, step, operation, constituent element, component or a combination thereof exists and not as excluding the existence of or a possibility of an addition of one or more other characteristics, numbers, steps, operations, constituent elements, components or combinations thereof.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be described in detail by explaining exemplary embodiments of the disclosure with reference to the attached drawings.

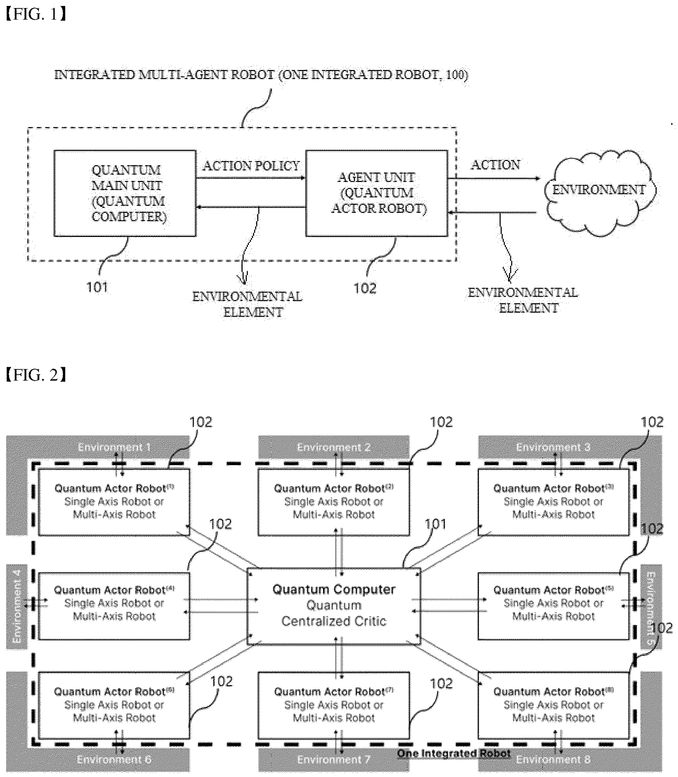

FIG. 1 is a conceptual diagram illustrating the operational environment of an integrated multi-agent robot using quantum computing according to an embodiment. FIG. 2 is a diagram exemplarily illustrating the configuration of the integrated multi-agent robot using quantum computing according to an embodiment.

Referring to FIG. 1, an integrated multi-agent robot using quantum computing 100 may include a quantum main unit (quantum computer) 101 including a computational unit (CPU) that performs quantum computing, and a plurality of agent units (quantum actor robots (QAR)) 102 whose behavior is controlled by the quantum main unit 101.

For example, the quantum main unit 101 may include a quantum computer having a computational unit (CPU) that performs quantum computing, and may further include a computing device having a conventional computational unit (CPU) based on electrical signals in addition to quantum computing.

In addition, the quantum main unit 101 may function as a cloud server that is accessible from the outside via a wired or wireless network, or may be configured to communicate with a cloud server located on an external network, thereby providing services such as Infrastructure-as-a-Service (IaaS), Platform-as-a-Service (PaaS), Software-as-a-Service (SaaS), and Function-as-a-Service (FaaS) to a user terminal accessing the cloud server by utilizing quantum computing resources through communication with the cloud server.

In one embodiment, each of the plural agent units 102 may be a power device that includes at least one sensor, collects environmental information using the at least one sensor, and performs an action by driving at least one built-in power actuator (for example, a motor) based on the collected environmental information.

In another embodiment, each of the plural agent units 102 may be a control unit that includes at least one sensor, collects environmental information using the included at least one sensor, and performs an action by operating at least one built-in unit control unit based on the collected environmental information. In one example, the control unit may be a power supply control device that controls the driving amount of a motor.

In one embodiment, each of the plural agent units 102 may have at least one motion axis and may perform movement in the direction of the motion axis as an action. For example, when the agent unit 102 has a single axis, the agent unit 102 may include a linear motor actuator having one motion axis as a power actuator. In another example, when the agent unit 102 is a multi-axis robot having two or more motion axes, it may be a robot arm in which a plurality of motors are respectively disposed at joint parts, and each motor functions to rotate as a motion axis.

Here, the integrated multi-agent robot 100 may be defined as an object that includes a collection of a plurality of unit robots (the unit robots correspond to the agent unit 102) and is configured to perform a specific task or objective by controlling the interactions of the respective unit robots (the device that controls the unit robots corresponds to the quantum main unit 101).

For example, in Extended PyMARL (EPyMARL) which is one of the Python-based codebases providing a reinforcement learning environment, several experimental environments using multiple agents are provided. For example, it provides experimental environments with objectives (or missions) such as loading all scattered food items, moving scattered shelves to target locations, or achieving combat victory through attack or healing, depending on the type of unit.

As a specific example, in an environment where the objective (or mission) is to move scattered shelves to target locations using a plurality of loading and unloading robots, each of the robots performing loading and unloading may correspond to the agent unit 102, a robot or control unit that controls the cooperative behavior of the agent units may be defined as the quantum main unit 101, and the concept that collectively refers to the group of the agent units and the quantum main unit may be defined as the integrated multi-agent robot 100.

In another simple example, when a robot composed of a plurality of drive axes is implemented as the integrated multi-agent robot, where the robot is configured to grasp and move an object to a specific location, each of the plural drive axes may be associated in a one-to-one correspondence with a controller that controls the driving amount (e.g., torque or power) of the corresponding axis, and this controller may be interpreted as the agent unit 102. The positional change of the robot caused by the driving amount of the agent unit and the reactive force transmitted from the object to the drive axis may be defined as environmental information. A main controller that uses the agent units corresponding to the respective drive axes to move the object according to the intended goal may be defined as the quantum main unit 101.

To simulate an experimental environment related to this, publicly available algorithms, including environment setup methods and policy computation strategies for various test conditions, such as those introduced at [https://agents. inf.ed.ac.uk/blog/epymarl/], have been disclosed, and thus a person skilled in the art may utilize them.

Based on an understanding of such MARL environments, the environment refers to the external world in which an agent takes an action and observes the result. The agent unit 102 may take an action within its respective environment and observe the resulting changes, thereby acquiring environmental elements.

In the case of MARL, it is common to use either the Centralized Training with Decentralized Execution (CTDE) framework or the Decentralized Training with Decentralized Execution (DTDE) framework.

In the former case (CTDE), learning is performed by aggregating all the environmental information individually collected by each agent unit 102, and using the aggregated data for training a single agent unit 102. In the latter case (DTDE), learning is performed using only the environmental information collected by the agent unit 102 itself.

In any case, it is the same in that, during the operational phase after learning, each agent utilizes only the environmental information (also referred to as observation data) collected by itself.

In both frameworks, each agent unit 102 may be equipped with a deep learning network, such as a Deep Q-Network (DQN), to learn independently, and may operate by dynamically responding to changes in individual environmental elements using the trained DQN.

In addition, the agent unit 102 may generate environmental information including the acquired environmental elements and provide it to the quantum main unit 101. For example, when environmental elements are acquired through an infrared sensor, the element may be light entering through the light-receiving part of the infrared sensor. The generation of environmental information from such environmental elements may include converting the environmental elements into a protocol format communicable with the quantum main unit 101.

The quantum main unit 101 may collect all environmental information collected from each of the plural agent units 102, and, through quantum computing-based operations on the aggregated environmental information, may evaluate the contribution of each agent unit 102 to the objective (or mission). Based on the evaluated contributions, it may determine, for each agent unit 102, an action policy that maximizes the value function in the current environment defined by the aggregated environmental information, and may provide the determined policy to the corresponding agent unit 102.

Here, the contribution may be individually calculated for each agent unit 102, and the total sum of the contributions calculated for all agent units 102 may be set to one. For example, the initial contributions calculated for each agent unit 102 may be normalized to values between 0 and 1, and each contribution may be obtained by dividing the normalized initial value by the sum of all normalized values across all agent units 102, such that the total becomes one. The method of determining the initial contribution may be independently derived by a person skilled in the art according to the objective of the simulation environment, and is not limited to a specific formula.

Here, the action policy may be composed of a plurality of behavioral guides that prescribe specific actions to be taken in a state determined by specific environmental information. The agent unit 102, upon receiving the action policy, determines the action to be taken based on its current state derived from the environmental information, and performs the determined action.

Here, the value function is a function that evaluates the state of an agent unit 102, derived from its environmental information, with a higher value when the state is closer to achieving the objective (or mission), given a specific action policy provided to the agent unit 102.

As a simple example, when considering an object (mission) in which a robot that can only move forward is used to reach a destination, the current position of the robot serves as the state, and the value function may be defined as a value that is inversely proportional to the distance between the current position and the destination.

When considering a wide variety of simulation environments, the value function may be defined as shown in Equation 1 below:

【Equation 1】

$$V^{\pi}(s) = \sum_{a \in A} \pi(a|s) \sum_{s',r} P(s',r|s,a)[r + \gamma V^{\pi}(s')]$$

Referring to Equation 1, the value function is a function that represents, as the value $V^{\pi}(s)$, the degree to which the state s, based on the current environmental information, is improved toward the objective when an action policy $\pi$ is provided to the agent unit 102. $\pi(a|s)$ denotes the probability that the agent unit 102 will take action $a$ in state s under policy $\pi$; $A$ is the set of actions that the agent unit 102 may take; P(s', r | s, a) indicates the probability that the state transitions to s' and reward *r* is received when action *a* is taken in state *s*; and $\gamma$ is a discount factor that indicates the relative importance of the future state s' compared to the current state *s*. The reward *r* is a value that serves as an indicator of how favorable the transition from state *s* to state *s'* is for the agent unit 102 in a given environment. For example, in the case of an agent unit tasked with transporting an object to a target point, the reward may be set to a higher value as the distance to the target point decreases, since less movement is required when the object is closer to the destination. The reward *r* may be a function individually defined by a person skilled in the art, depending on the purpose of each simulation environment and is not limited to a specific formula.

The quantum main unit 101 may select, from among a plurality of predefined action policies, one action policy that yields the maximum result of the value function, and may provide the selected action policy to the agent unit 102. Expressed mathematically, the selected action policy $\pi'$ in state *s*, derived from the environmental information of the agent unit 102, is shown in Equation 2 below.

【Equation 2】

$$\pi'(s) = \arg\max_{a} \sum_{s', r} P(s', r | s, a)[r + \gamma V^{\pi}(s')]$$

Here, the quantum main unit 101 may calculate *p*, the number of possible state transitions identified through the environmental information of each agent unit 102, and, for each estimated case, may calculate *q*, the number of possible actions that the corresponding agent unit 102 can take. It may then define $p \times q$ action policies in advance using quantum computing. As a simple example, if the environmental element observed through the environmental information is the "distance" to the target, and the possible actions of the agent unit 102 involve adjusting the angle of a motor, the action policies may be defined to compare the "distance" with at least one threshold value and, depending on whether the distance exceeds the threshold, adjust the angle clockwise or counterclockwise between 0 and 180 degrees.

That is, the quantum main unit 101 may fully utilize the advanced computational power of quantum computing to evaluate, for each of the plural agent units 102, the value of reaching the objective (or mission) from a given state s under a specific action policy, using the value function. It may select the action policy that maximizes the evaluated value, and repeatedly distribute it to each agent unit 102. This process may be repeated until there is no further change in the action policy distributed to any of the agent units 102.

In one embodiment, the quantum main unit 101 may multiply the result of the value function according to Equation 1 by the aforementioned contribution value, which represents the degree of influence of each agent unit 102, and may use the resulting product as the output of the value function. This allows the value function to individually reflect the influence of each agent unit 102 within its respective environment.

By aggregating all environmental information, an action policy may be determined and provided to each agent unit 102 so that it can select the optimal action to achieve the objective (or mission). Each agent unit 102 may then perform its next action according to the provided collaborative policy, collect new environmental information, and transmit it to the quantum main unit 101, repeating this cycle.

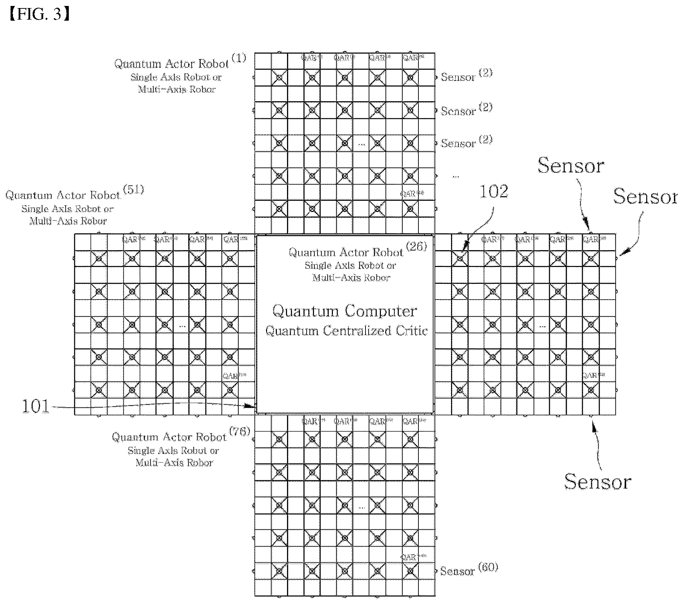

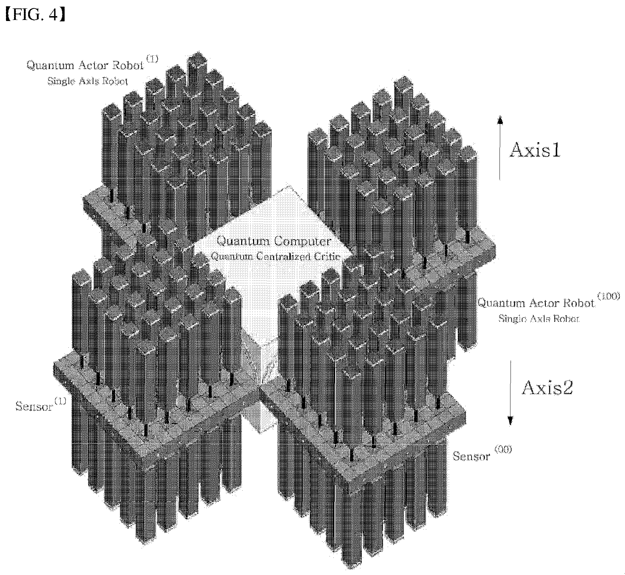

FIG. 3 is a diagram illustrating the integrated multi-agent robot using quantum computing according to an embodiment in a two-dimensional plane. FIG. 4 is a diagram illustrating the integrated multi-agent robot using quantum computing according to an embodiment in a three-dimensional structure.

Referring to FIGS. 3 and 4, it can be seen that the integrated multi-agent robot 100 using quantum computing is illustrated in a two-dimensional and three-dimensional configuration, respectively, according to the deployment environment.

Referring first to FIG. 3, the integrated multi-agent robot 100 may include groups of agent units 102 arranged in four directions, i.e., up, down, left, and right, with respect to the center where the quantum main unit 101 is positioned. In this case, the groups of agent units 102 may be spaced apart from each other at predetermined intervals and arranged in a grid pattern. For example, the group of agent units 102 may consist of 25 agent units 102, arranged in a grid of 5 units horizontally and 5 units vertically. In one embodiment, the group may be disposed on a square base substrate.

Here, the group of agent units 102 may include a predetermined number of sensors spaced apart at regular intervals in the three directions excluding the direction in which the quantum main unit 101 is located. For example, five sensors may be arranged at predetermined intervals along the boundary lines corresponding to the upper, right, and lower directions centered around the group of agent units 102. That is, as illustrated in the drawing, when 25 agent units 102 are included in each of the four directions, resulting in a total of 100 agent units 102 being installed, 15 sensors may be arranged in each direction, for a total of 60 sensors. Each sensor may be shared by the agent units 102 located within a certain range around the area in which the sensor is installed, and may be used to collect environmental factors from the sensor to generate environmental information. In one embodiment, the sensor is an infrared sensor, and the environmental factor may be light (e.g., wavelength, energy amount, etc.) that is emitted from the infrared sensor, reflected off an object, and received by the light-receiving unit of the infrared sensor.

In addition, the agent unit 102 may have a single motion axis, and, for example, each agent unit 102 may be configured to move in a direction perpendicular to the plane on which the agent unit is arranged-that is, in a direction entering or exiting the plane corresponding to the ground surface in FIG. 3.

Meanwhile, referring to FIG. 4, the group of agent units 102 may include a first group and a second group, which are arranged to face each other with respect to the plane of the base substrate on which the group is disposed.

In this case, each of the agent units 102 belonging to the first group may have a single motion axis that allows movement in a first direction (Axis1) with respect to the plane of the base substrate.

Each of the agent units 102 belonging to the second group may have a single motion axis that allows movement in a second direction (Axis2) opposite to the first direction (Axis1) with respect to the plane of the base substrate.

In one example, the single motion axis may be arranged perpendicular to the plane of the base substrate, and the agent unit 102 may be formed in a rod shape with its length direction aligned with the movement direction of the single motion axis. One end of the agent unit 102, facing the base substrate, may be arranged such that the motion axis is exposed to the outside.

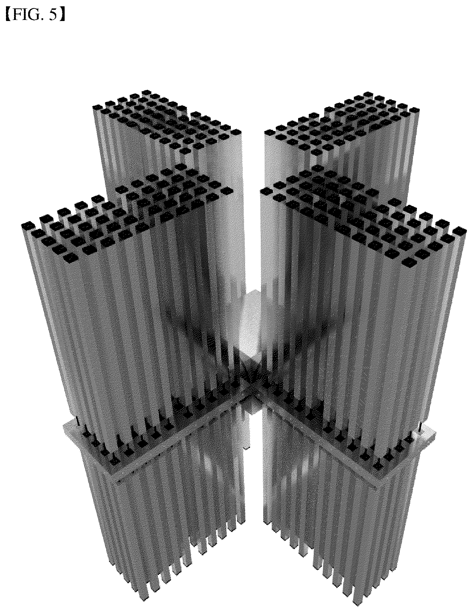

FIG. 5 is a diagram illustrating an embodiment in which the agent units of the integrated multi-agent robot using quantum computing according to FIG. 4 are extended and applied.

Referring to FIG. 5, the integrated multi-agent robot 100 using quantum computing may further include a third group formed in a continuous grid pattern adjacent to the first group, and a fourth group formed in a continuous grid pattern adjacent to the second group.

In addition, the third group and the fourth group may be arranged to face each other with respect to the plane of the base substrate. The third group may be configured to have the same motion axis as the first group, and the fourth group may be configured to have the same motion axis as the second group.

That is, in the embodiment shown in FIG. 5, the integrated multi-agent robot 100 using quantum computing may include the first through fourth groups arranged in four directions, each forming a 90-degree angle with respect to the center where the quantum main unit 101 is positioned.

Accordingly, in the embodiment shown in FIG. 5, the integrated multi-agent robot 100 using quantum computing may include a total of 400 agent units 102 and a total of 200 sensors.

In the embodiment shown in FIG. 5, since sensors are not placed between the third group and the first group, five sensors may be arranged along both the upper and lower outer lines of the first group, and five sensors may be arranged along the upper, lower, and right outer lines of the third group, resulting in a total of 25 sensors along the outer lines of the first group and third group. Similarly, a total of 25 sensors may be arranged along the outer lines of the second group and fourth group.

The methods according to the embodiments of the present invention may be implemented in the form of a program command that can be executed through various computer means and recorded in a computer-readable medium. The computer-readable medium can store program commands, data files, data structures or combinations thereof. The program commands recorded in the medium may be specially designed and configured for the present invention or be known to those skilled in the field of computer software.

Examples of a computer-readable recording medium may include hardware devices such as ROMs, RAMs and flash memories, which are specially configured to store and execute program commands. Examples of the program commands may include machine language code created by a compiler and high-level language code executable by a computer using an interpreter and the like. The hardware devices described above may be configured to operate as at least one software module to perform the operations of the disclosure, and vice versa.

In addition, the above-described method or apparatus may be implemented by combining all or part of constructions or functions thereof, or the constructions or functions may be separately implemented.

Although the present invention has been described above with reference to the embodiments of the present invention, those skilled in the art may variously modify and change the present invention without departing from the spirit and scope of the present invention as set forth in the claims below.

**Claims**

1. An integrated multi-agent robot using quantum computing, comprising:

   a quantum main unit comprising a computational unit (CPU) that performs quantum computing; and
   a plurality of agent units whose behaviors are controlled by the quantum main unit,
   wherein each of the plurality of agent units collects environmental elements using at least one sensor, and
   operates by driving at least one built-in power actuator based on the collected environmental elements,

each of the plural agent units generates environmental information comprising the environmental elements and provides the environmental information to the quantum main unit, and

the quantum main unit collects all the environmental information gathered from each of the plural agent units, performs quantum computing-based operations on the collected environmental information to evaluate a contribution corresponding to each of the plural agent units, and determines, for each agent unit, an action policy that maximizes a value function in the environment defined by the agent unit's environmental information based on the evaluated contribution, and provides the determined action policy to a corresponding agent unit.

2. The integrated multi-agent robot according to claim 1, wherein the robot comprises a group of agent units spaced apart from each other in four directions, i.e., up, down, left, and right, with respect to a center where the quantum main unit is positioned, and

the group is arranged in a grid pattern with predetermined spacing between units, and is composed of 25 agent units arranged in 5 rows and 5 columns.

3. The integrated multi-agent robot according to claim 2, wherein the at least one sensor is arranged at predetermined intervals along boundary lines in upward, rightward, and downward directions around the group, and

each of the agent units has a single motion axis configured to allow movement in a direction perpendicular to the plane on which the agent unit is disposed.

【FIG. 1】

INTEGRATED MULTI-AGENT ROBOT (ONE INTEGRATED ROBOT, 100)

【FIG. 2】

【FIG. 3】

【FIG. 4】

Quantum Actor Robot (1)
Single Axis Robot

Quantum Computer
Quantum Centralized Critic

Axis1

Quantum Actor Robot (100)
Single Axis Robot

Sensor (1)

Axis2

Sensor (00)

【FIG. 5】

## INTERNATIONAL SEARCH REPORT

| | International application No. |
|---|---|
| | **PCT/KR2025/010882** |

| A. | CLASSIFICATION OF SUBJECT MATTER |
|---|---|

**B25J 9/16**(2006.01)i; **B25J 13/08**(2006.01)i; **G06N 10/40**(2022.01)i

According to International Patent Classification (IPC) or to both national classification and IPC

| B. | FIELDS SEARCHED |
|---|---|

Minimum documentation searched (classification system followed by classification symbols)

B25J 9/16(2006.01); B25J 13/00(2006.01); G05B 13/02(2006.01); G06F 18/2113(2023.01); G06F 18/2321(2023.01); G06K 9/62(2006.01); G06N 10/20(2022.01); G06N 10/40(2022.01); G06N 10/60(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 로봇(robot), 멀티에이전트(multi-agent), 양자 컴퓨팅(quantum computing), 양자 메인 유닛(quantum main unit), 에이전트 유닛(agent unit), 동력구동부(power driving unit), 환경 정보 (environmental information), 행동 정책(behavior policy), 기여도(contribution)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2023-0171040 A (UIPATH, INC.) 20 December 2023 (2023-12-20) <br> paragraphs [0016]-[0040], claims 1, 13 and figures 1-5 | 1-3 |
| A | KR 10-2018-0137562 A (NEURALA INC.) 27 December 2018 (2018-12-27) <br> paragraphs [0026]-[0033], [0086]-[0094], claims 1-11 and figures 1-8 | 1-3 |
| A | JP 2020-530602 A (GOOGLE LLC) 22 October 2020 (2020-10-22) <br> claims 1, 13-21 and figures 1-6 | 1-3 |
| A | KR 10-2022-0062228 A (UIPATH, INC.) 16 May 2022 (2022-05-16) <br> claims 1-8 and figures 1, 2 | 1-3 |
| A | KR 10-2024-0076120 A (KOREA UNIVERSITY RESEARCH AND BUSINESS FOUNDATION) 30 May 2024 (2024-05-30) <br> claims 1-6 and figures 1-4 | 1-3 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 October 2025** | **16 October 2025** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2025/010882** |

### C. DOCUMENTS CONSIDERED TO BE RELEVANT

| Category* | Citation of document, with indication, where appropriate, of the relevant passages | Relevant to claim No. |
| --- | --- | --- |
| PX | KR 10-2762344 B1 (BASE AND POWER CITY CORP.) 04 February 2025 (2025-02-04)<br>claims 1-3<br>-This document is a published earlier application that serves as a basis for claiming priority of the present international application. | 1-3 |

Form PCT/ISA/210 (second sheet) (July 2022)

**INTERNATIONAL SEARCH REPORT**
Information on patent family members

International application No.

**PCT/KR2025/010882**

| Patent document cited in search report | | | Publication date (day/month/year) | Patent family member(s) | | | Publication date (day/month/year) |
|---|---|---|---|---|---|---|---|
| KR | 10-2023-0171040 | A | 20 December 2023 | CN | 115474440 | A | 13 December 2022 |
| | | | | EP | 4094210 | A1 | 30 November 2022 |
| | | | | JP | 2024-517362 | A | 22 April 2024 |
| | | | | US | 11934416 | B2 | 19 March 2024 |
| | | | | US | 12277127 | B2 | 15 April 2025 |
| | | | | US | 2022-00327351 | A1 | 13 October 2022 |
| | | | | US | 2024-0193169 | A1 | 13 June 2024 |
| | | | | WO | 2022-220873 | A1 | 20 October 2022 |
| KR | 10-2018-0137562 | A | 27 December 2018 | CN | 109348707 | A | 15 February 2019 |
| | | | | EP | 3445539 | A1 | 27 February 2019 |
| | | | | JP | 2019-518273 | A | 27 June 2019 |
| | | | | US | 2019-0061147 | A1 | 28 February 2019 |
| | | | | WO | 2017-189859 | A1 | 02 November 2017 |
| JP | 2020-530602 | A | 22 October 2020 | CN | 110730970 | A | 24 January 2020 |
| | | | | CN | 110730970 | B | 05 March 2024 |
| | | | | EP | 3616129 | A1 | 04 March 2020 |
| | | | | JP | 7087006 | B2 | 20 June 2022 |
| | | | | US | 11559887 | B2 | 24 January 2023 |
| | | | | US | 12240117 | B2 | 04 March 2025 |
| | | | | US | 2020-0276703 | A1 | 03 September 2020 |
| | | | | US | 2023-0150127 | A1 | 18 May 2023 |
| | | | | WO | 2019-060632 | A1 | 28 March 2019 |
| KR | 10-2022-0062228 | A | 16 May 2022 | CN | 113950665 | A | 18 January 2022 |
| | | | | EP | 3948722 | A1 | 09 February 2022 |
| | | | | JP | 2022-548437 | A | 21 November 2022 |
| | | | | JP | 7572971 | B2 | 24 October 2024 |
| | | | | US | 11433536 | B2 | 06 September 2022 |
| | | | | US | 2021-0086354 | A1 | 25 March 2021 |
| | | | | WO | 2021-055674 | A1 | 25 March 2021 |
| KR | 10-2024-0076120 | A | 30 May 2024 | None | | | |
| KR | 10-2762344 | B1 | 04 February 2025 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DONG D.** ; **CHEN C.** ; **LI H.** ; **TARN T. J.** Quantum reinforcement learning. *IEEE Transactions on Systems, Man, and Cybernetics. Part B, Cybernetics*, 2008, vol. 38 (5), 1207-1220
- **NARAYANAN A.** ; **MENNEER T.** Quantum artificial neural network architectures and components. *Information Sciences*, 2000, vol. 128 (3-4), 231-255
- **V. SAGGIO**. Experimental quantum speed-up in reinforcement learning agents. *Nature*, 2021, vol. 591, 229-233, https://arxiv.org/abs/2103.06294

- **CHAO YU**. The Surprising Effectiveness of PPO in Cooperative, Multi-Agent Games. *arXiv:2103.01955*, 2021, https://doi.org/10.48550/arXiv.2103.01955
- **GEORGIOS PAPOUDAKIS**. Dealing with Non-Stationarity in Multi-Agent Deep Reinforcement Learning. *arXiv:1906.04737*, 2019
- **YIHAN WANG**. Off-Policy Multi-Agent Decomposed Policy Gradients. *arXiv:2007.12322*, 2020, https://doi.org/10.48550/arXiv.2007.12322